(19) Europäisches Patentamt European Patent Office Office européen des brevets

(11) **EP 3 524 700 A1**

(12) **EUROPEAN PATENT APPLICATION**
published in accordance with Art. 153(4) EPC

(43) Date of publication:
**14.08.2019 Bulletin 2019/33**

(51) Int Cl.:
***C22B 23/00*** (2006.01)

(21) Application number: **17858474.4**

(22) Date of filing: **05.10.2017**

(86) International application number:
**PCT/JP2017/036245**

(87) International publication number:
**WO 2018/066638 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.10.2016 JP 2016198688**

(71) Applicant: **Sumitomo Metal Mining Co., Ltd.
Tokyo 105-8716 (JP)**

(72) Inventors:
• **MIYAMOTO Takashi
Tokyo 105-8716 (JP)**
• **SHIBAYAMA Keisuke
Tokyo 105-8716 (JP)**

(74) Representative: **Jones, Nicholas Andrew
Withers & Rogers LLP
4 More London Riverside
London, SE1 2AU (GB)**

(54) **HYDROMETALLURGICAL METHOD FOR REFINING NICKEL OXIDE ORE**

(57) Disclosed herein is a hydrometallurgical method for refining nickel oxide ore in which a filtration device is prevented from being quickly clogged to improve production efficiency.

The hydrometallurgical method for refining nickel oxide ore includes: a leaching step in which nickel oxide ore is subjected to acid leaching under high pressure; a solid-liquid separation step in which an obtained leach slurry is washed and then subjected to solid-liquid separation to obtain a leachate containing the nickel; a neutralization step in which a neutralizer and a flocculant are added to the leachate to obtain a neutralized precipitate, and then the neutralized precipitate is separated by solid-liquid separation from a post-neutralization solution containing nickel; a dezincification step in which a sulfurizing agent is added to the post-neutralization solution to obtain a slurry containing zinc sulfide, and the slurry is subjected to solid-liquid separation to obtain the zinc sulfide and a post-dezincification solution; and a nickel recovery step in which a sulfurizing agent is added to the post-dezincification solution to obtain a mixed sulfide containing the nickel, and the mixed sulfide is separated by solid-liquid separation from a post-sulfurization solution, wherein an amount of the neutralizer added is adjusted so that a Fe concentration of the post-neutralization solution obtained in the neutralization step is 1.25 g/L or less.

EP 3 524 700 A1

## Description

Technical Field

The present invention relates to a hydrometallurgical method for refining nickel oxide ore containing zinc, and particularly relates to a hydrometallurgical method for refining nickel oxide ore in which solid-liquid separability of a zinc sulfide slurry produced in a dezincification step is improved.

Background Art

As a hydrometallurgical method for refining nickel oxide ore, a high pressure acid leaching (HPAL) process is known in which nickel oxide ore and sulfuric acid placed in a pressurized vessel, such as an autoclave, are treated under high pressure at a high temperature of about 220 to 280°C to leach valuable metals contained in the nickel oxide ore, such as nickel and cobalt.

For example, Patent Literature 1 discloses a HPAL process including: a leaching step in which sulfuric acid is added to a slurry of nickel oxide ore and a resulting mixture is stirred at a temperature of 220 to 280°C to perform leaching; a solid-liquid separation step in which a leach slurry produced in the leaching step is subjected to multistage washing and then to solid-liquid separation to obtain a leachate containing nickel and cobalt and a leach residue; a neutralization step in which calcium carbonate is added to the leachate to adjust its pH at 4 or less while oxidation of the leachate is prevented to produce a neutralized precipitate slurry containing trivalent iron and a mother liquor for nickel recovery; and a sulfurization step in which hydrogen sulfide gas is blown into the mother liquor to produce a sulfide containing nickel and cobalt and a barren solution. Patent literature 1 states that this HPAL process makes it possible to simplify the leaching step and the solid-liquid separation step, to reduce the amount of consumption of a neutralizer and the amount of a precipitate in the neutralization step, and further to simply and efficiently perform the total process of smelting due to efficient repeated use of water.

Patent Literature 2 discloses a hydrometallurgical process in which nickel oxide ore is subjected to a series of treatments through a leaching and solid-liquid separation step, a neutralization step, a dezincification step, and a nickel recovery step, and further discloses a technique used in the dezincification step, in which a sulfurizing agent is added to a post-neutralization solution containing nickel, cobalt, and zinc to produce zinc sulfide, and the zinc sulfide is separated to obtain a mother liquor for nickel recovery containing nickel and cobalt. Patent literature 2 states that in the dezincification step, filterability of the zinc sulfide is improved to prevent clogging of a filter cloth, which makes it possible to reduce the frequency of washing and replacement of a filter cloth and increase the recovery rate of nickel. More specifically, in the process disclosed in Patent Literature 2, a leach residue is added to a leachate in the neutralization step, and the pH of a post-neutralization solution to be treated in the dezincification step is adjusted to 3.0 to 3.5, and suspended matter containing a neutralized precipitate and the leach residue is allowed to remain in the post-neutralization solution so that the turbidity of the post-neutralization solution is 100 to 400 NTU.

Citation List

Patent Literature

Patent Literature 1: JP 2005-350766 A
Patent Literature 2: JP 2010-037626 A

Summary of Invention

Technical Problem

As described above, the HPAL process is different from a pyrometallurgical process in which nickel oxide ore is smelted by melting in a furnace at high temperature, and does not require reduction of oxide ore and a drying step, and all the steps of the HPAL process are performed under wet conditions. For this reason, the HPAL process is advantageous in terms of energy and costs. Further, a high-purity nickel and cobalt-containing sulfide can be obtained in which nickel is concentrated to a nickel grade of 50 to 60% by mass. This makes it possible to downsize facility for handling and purification used in a subsequent purification step and therefore to reduce costs.

However, when zinc contained in nickel oxide ore is industrially separated by the process disclosed in Patent Literature 2, there is a case where solid-liquid separability by filtration, that is, filterability of a zinc sulfide-containing slurry produced in the dezincification is quickly reduced. The reason why filterability is quickly reduced is considered to be clogging with a precipitate such as a fine precipitate contained in the slurry. Generation of such a fine precipitate necessitates frequent washing to remove the obstruction.

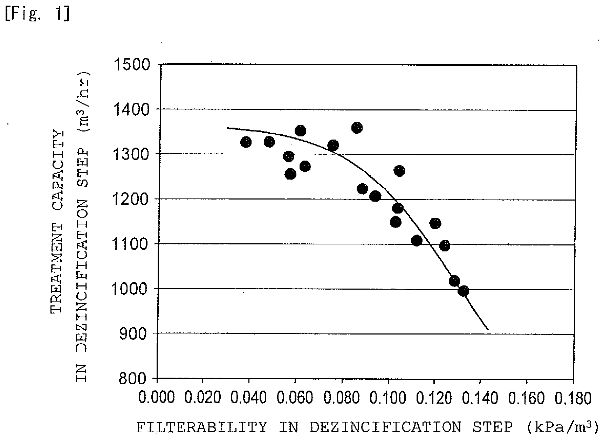

In an industrial filtration step, for example, a filter press is often used. In this case, the pressure of a slurry supplied to the filter press increases as clogging of a filter cloth of the filter press progresses. As a result, as shown in FIG. 1, the treatment capacity of the filter reduces as the differential pressure of the filter per unit cumulative flow rate during filtration increases. More specifically, the treatment capacity of the filter significantly reduces when a value obtained by dividing the differential pressure of the filter by a cumulative flow rate is larger than about 0.10 kPa/m$^3$.

In light of the above conventional problems, it is an object of the present invention to provide a hydrometallurgical method for refining nickel oxide ore in which solid-liquid separability of a zinc sulfide slurry produced in a dezincification step in a HPAL process is improved, which prevents a filtration device from being quickly clogged and thus improves production efficiency.

Solution to problem

In order to achieve the above object, the present inventors have intensively studied by focusing attention on a point that, in a dezincification step of a HPAL process in which a sulfide is added to a post-neutralization solution obtained by neutralizing a leachate obtained by acid leaching of nickel oxide ore to remove zinc as a precipitate, Fe contained in the post-neutralization solution reacts with the sulfurizing agent added in the dezincification step to form fine iron sulfide particles. As a result, the present inventors have found that solid-liquid separability of a slurry containing the sulfide can be improved by reducing the concentration of Fe remaining in the post-neutralization solution to a predetermined value or less. This finding has led to the completion of the present invention.

More specifically, the present invention is directed to a hydrometallurgical method for refining nickel oxide ore, comprising: a leaching step in which nickel oxide ore is subjected to acid leaching with a sulfuric acid solution in a pressurized vessel under high pressure; a solid-liquid separation step in which a leach slurry obtained in the leaching step is washed and then subjected to solid-liquid separation to obtain a leachate containing nickel and impurity elements and a leach residue; a neutralization step in which a neutralizer is added to the leachate to adjust pH, and a flocculant is added to the leachate to produce a neutralized precipitate containing the impurity elements, and then the neutralized precipitate is separated by solid-liquid separation from a post-neutralization solution containing the nickel; a dezincification step in which a sulfurizing agent is added to the post-neutralization solution to produce zinc sulfide, and then a slurry containing the zinc sulfide is subjected to solid-liquid separation to obtain the zinc sulfide and a post-dezincification solution; and a nickel recovery step in which a sulfurizing agent is added to the post-dezincification solution to produce a mixed sulfide containing the nickel, and then the mixed sulfide is separated by solid-liquid separation from a post-sulfurization solution, wherein an amount of the neutralizer added is adjusted so that a Fe concentration of the post-neutralization solution obtained in the neutralization step is 1.25 g/L or less.

Advantageous Effects of Invention

According to the hydrometallurgical method for refining nickel oxide ore of the present invention, it is possible to improve solid-liquid separability of a slurry containing zinc sulfide produced in a dezincification step.

Brief Description of Drawings

FIG. 1 is a graph showing a relationship between filterability and treatment capacity when a slurry containing zinc sulfide produced in a dezincification step in a hydrometallurgical method for refining nickel oxide ore is filtered by a filter press.
FIG. 2 is a process flow showing a hydrometallurgical method according to an embodiment of the present invention.
FIG. 3 is a graph showing a relationship between the Fe concentration of a post-neutralization solution and the diameter of precipitate particles produced in a dezincification step in the hydrometallurgical method according to the embodiment of the present invention.
FIG. 4 is a graph showing a relationship between the Fe concentration of a post-neutralization solution and filterability in a dezincification step in the hydrometallurgical method according to the embodiment of the present invention.
FIG. 5 is a graph showing a relationship between the ratio of a flocculant added and filterability in a dezincification step in the hydrometallurgical method according to the embodiment of the present invention.
FIG. 6 is a graph showing a relationship between the equivalent of hydrogen sulfide added and filterability in a dezincification step in the hydrometallurgical method according to the embodiment of the present invention.

FIG. 7 is a graph showing a relationship between the equivalent of hydrogen sulfide added and the precipitation ratio of nickel in a dezincification step in the hydrometallurgical method according to the embodiment of the present invention.

Description of Embodiments

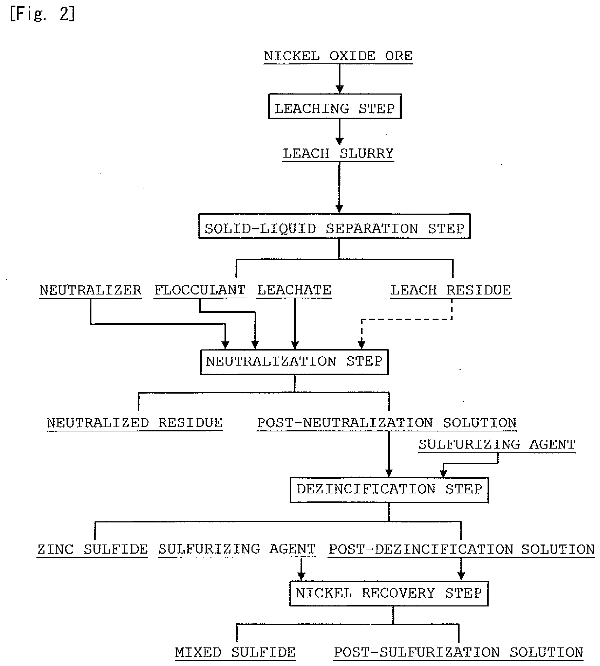

Hereinbelow, a hydrometallurgical method for refining nickel oxide ore according to an embodiment of the present invention will be described. As shown in FIG. 2, the hydrometallurgical method for refining nickel oxide ore according to an embodiment of the present invention includes: a leaching step in which nickel oxide ore is subjected to acid leaching with a sulfuric acid solution in a pressurized vessel under high pressure; a solid-liquid separation step in which a leach slurry obtained in the leaching step is washed and then subjected to solid-liquid separation to obtain a leachate containing nickel and impurity elements and a leach residue; a neutralization step in which a neutralizer is added to the leachate to adjust pH, and a flocculant is added to the leachate to produce a neutralized precipitate containing the impurity elements, and then the neutralized precipitate is separated by solid-liquid separation from a post-neutralization solution containing the nickel; a dezincification step in which a sulfurizing agent is added to the post-neutralization solution to produce zinc sulfide, and a slurry containing the zinc sulfide is subjected to solid-liquid separation to obtain the zinc sulfide and a post-dezincification solution; and a nickel recovery step in which a sulfurizing agent is added to the post-dezincification solution to produce a mixed sulfide containing the nickel, and then the mixed sulfide is separated by solid-liquid separation from a post-sulfurization solution.

In the embodiment of the present invention, the Fe concentration is adjusted which is contained in the post-neutralization solution to be treated in the dezincification step in the series of steps described above so that the differential pressure of a filter per unit cumulative flow rate during filtration in the dezincification step is less than 0.10 $kPa/m^3$. The reason why the differential pressure per unit cumulative flow rate is used as an indicator of filterability is that a smelting plant, in which nickel oxide ore is industrially treated, generally uses constant-rate filtration in which a slurry is supplied to a filtration device at a constant flow rate, and therefore the filtration device can be easily managed.

The above-described differential pressure per unit cumulative flow rate during filtration is a value determined by dividing the differential pressure of a filtration device at the time of filtration by the total flow rate of a slurry treated by the filtration device from the time of replacement or washing of a filter cloth of the filtration device to the time of filtration. The total flow rate can be obtained from an integrating flowmeter provided on, for example, the slurry supply side of the filtration device. As a specific method for adjusting the Fe concentration of the post-neutralization solution, a method can be used in which the amount of the neutralizer added in the neutralization step is increased or decreased. That is, the Fe concentration of the post-neutralization solution can be reduced by increasing the amount of the neutralizer added. It is to be noted that the neutralizer to be used may be calcium hydroxide, limestone, sodium hydroxide, or the like. Among them, calcium hydroxide is preferred from an industrial viewpoint.

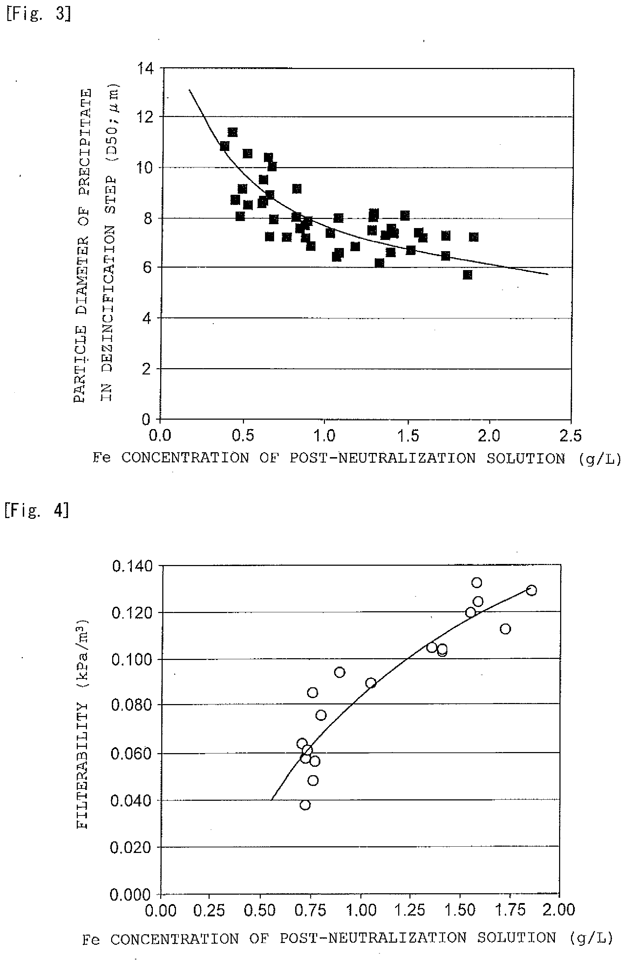

By adjusting the Fe concentration of the post-neutralization solution in such a manner as described above, it is possible to change solid-liquid separability in the dezincification step. That is, as can be seen from FIG. 3 showing a relationship between the Fe concentration of the post-neutralization solution obtained in the neutralization step and the particle diameter ($\mu m$) of a precipitate (taken as D50) obtained in the dezincification step, the particle diameter of the precipitate after a dezincification reaction can be made larger by reducing the Fe concentration. More specifically, the particle diameter of the precipitate can be made larger by setting the Fe concentration to 1.25 g/L or less, more preferably 1.00 g/L or less, most preferably 0.75 g/L or less. As a result, as can be seen from FIG. 4 showing a relationship between the Fe concentration of the post-neutralization solution and filterability in the dezincification step, the differential pressure can be reduced to less than 0.10 $kPa/m^3$ by setting the Fe concentration of the post-neutralization solution to 1.25 g/L or less, and can be more significantly reduced by setting the Fe concentration of the post-neutralization solution to 0.75 g/L or less.

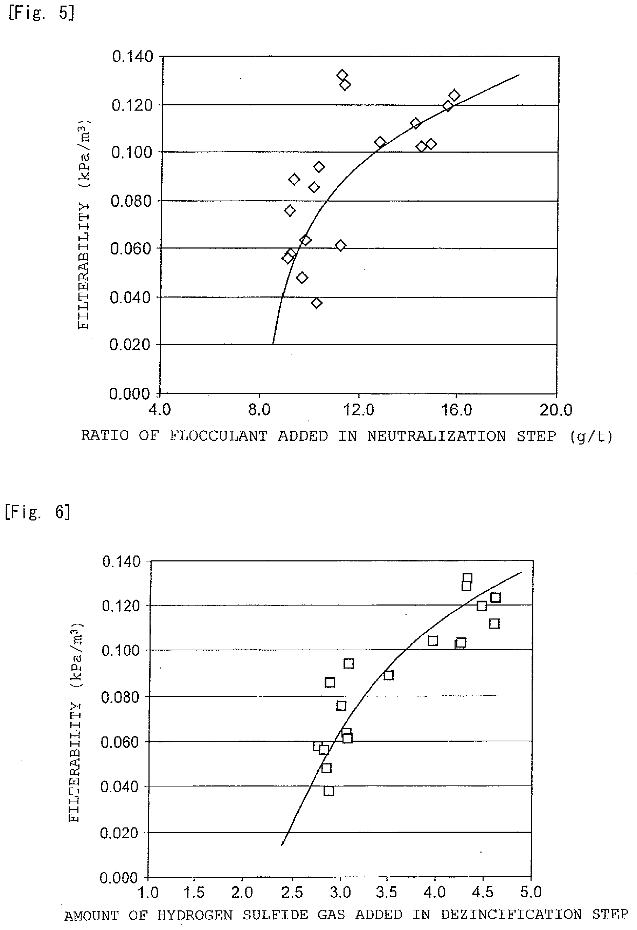

In the neutralization step, a flocculant is added together with the neutralizer or added to a post-neutralization slurry to promote separation of a produced neutralized precipitate by sedimentation. In this case, as shown in FIG. 5, the ratio of the flocculant to be added is preferably adjusted at most to 12 g or less, more preferably 10 g or less per ton of the amount of the slurry after addition of the neutralizer. By adding a predetermined amount of the flocculant in such a manner as described above and maintaining the Fe concentration of the post-neutralization solution at 1.25 g/L or less, it is possible to further improve filterability. It is to be noted that the flocculant to be used is preferably a cationic polymer flocculant because when an inorganic flocculant is used, there is a fear that impurities such as iron and aluminum may be mixed into the system. Further, as shown by a dotted line in FIG. 2, a leach residue may be added after neutralization to improve the sedimentation property of the neutralized precipitate. In this case, the amount of the flocculant to be added is preferably set to 12 g or less, more preferably 10 g or less per ton of a post-neutralization slurry after addition of the leach residue.

In general, the amount of a flocculant to be added is optimally selected based on the sedimentation property of a slurry. In the case of HPAL processing of nickel oxide ore, even when the flocculant is added in an amount exceeding 12 g per ton of the post-neutralization slurry, the sedimentation property of the slurry is not improved. Rather, there is a fear that filterability is deteriorated. It is to be noted that the lower limit of the amount of the flocculant to be added is not particularly limited, but is preferably 8 g/L or more per ton of the post-neutralization slurry. The reason for this is that the amount of the flocculant added to perform solid-liquid separation of the post-neutralization slurry can be theoretically reduced to 0 by, for example, prolonging the time for which the post-neutralization slurry is allowed to stand, which is, however, undesirable from an industrial viewpoint. It is to be noted that the reason why filterability in the dezincification step is improved by adjusting the amount of the flocculant added to 12 g or less per ton of the post-neutralization slurry is considered to be that the viscosity of the post-neutralization solution to be treated in the dezincification step is also reduced.

The present inventors have further found that filterability can be improved also by adjusting the amount of the sulfurizing agent added to precipitate zinc as a sulfide in the dezincification step. More specifically, the sulfurizing agent to be used is not limited to hydrogen sulfide gas, and may be a solid one such as sodium sulfide or sodium hydrogen sulfide or a liquid one obtained by dissolving the solid one. For example, when hydrogen sulfide gas is used as the sulfurizing agent, a reaction represented by the following formula 1 occurs.

$$[\text{Formula 1}] \qquad Zn^{2+} + H_2S = ZnS + 2H^+$$

As can be seen from the above formula 1, 1 mol of hydrogen sulfide gas should be stoichiometrically added to 1 mol of zinc. However, the sulfurizing agent needs to be added in an amount of equal to or more than its chemical equivalent because a sulfurization reaction is industrially performed in a continuous reactor and is influenced by other metal elements that may be present in minute amounts in a reaction liquid. More specifically, as shown in FIG. 6, the sulfurizing agent is preferably added in an amount of 3.5 molar equivalents or less, more preferably 3.0 molar equivalents or less while, as described above, the Fe concentration of the post-neutralization solution to be treated in the dezincification step is maintained at 1.25 g/L or less. This makes it possible to maintain the differential pressure of a filter per unit cumulative flow rate during filtration at less than $0.10$ kPa/m$^3$ and therefore to achieve excellent filterability. It is to be noted that FIG. 6 is a graph showing a case where 12 g of the flocculant is added per ton of the slurry.

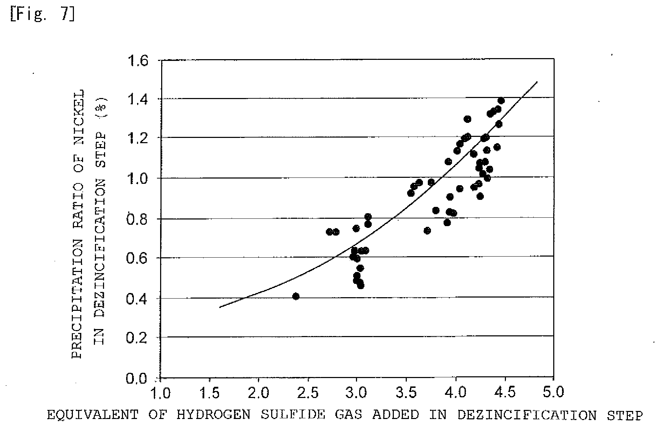

When the amount of the sulfurizing agent added exceeds 3.5 molar equivalents, the differential pressure exceeds $1.0$ kPa/m$^3$. Particularly, when the amount of the sulfurizing agent added exceeds 4.5 molar equivalents, as shown in FIG. 7, the amount of a precipitate of nickel significantly increases, which is not preferred because nickel is lost and the precipitate load of a filter increases. It is to be noted that the lower limit of the amount of the sulfurizing agent added is preferably 1.0 molar equivalent. Since zinc is only slightly more likely to be sulfurized than nickel, there is a case where nickel and zinc cannot be well separated from each other only by adding the sulfurizing agent. However, as described above, by adjusting the amount of the sulfurizing agent added, only zinc can be selectively sulfurized while sulfurization of valuable nickel is prevented. It is to be noted that the precipitation ratio of nickel shown in FIG. 7 was calculated by the following formula 2.

```
[Formula 2]

Nickel precipitation ratio (%) = (nickel

concentration of post-neutralization solution - nickel concentration of post-dezincification solution) / nickel

concentration of post-neutralization solution × 100
```

Examples

According to a process shown in FIG. 2, nickel oxide ore and sulfuric acid were placed in a pressurized vessel and heated to a temperature of 240 to 260°C to perform leaching at high temperature and high pressure. The thus obtained leach slurry was subjected to solid-liquid separation to obtain a leach residue and a leachate. A certain amount of the leachate was taken out of a storage tank, calcium hydroxide was continuously added thereto as a neutralizer to adjust pH to 2 to 3, and KURIFARM PA-904 manufactured by Kurita Water Industries Ltd. was continuously added as a flocculant to form a slurry.

The slurry was subjected to solid-liquid separation to obtain a post-neutralization solution, and hydrogen sulfide gas was continuously blown into the post-neutralization solution to precipitate a sulfide. The sulfide-containing reaction liquid slurry was supplied to a filter press whose filter cloth had been washed and subjected to solid-liquid separation.

At the time of the treatment described above, the amount of the flocculant added and the amount of hydrogen sulfide blown were changed step by step, and the Fe concentration of the post-neutralization solution, the differential pressure of the filter press, and the amount of the slurry treated were measured in each case.

In this way, samples 1 to 18 prepared under different conditions were treated. The Fe concentration of the post-neutralization solution obtained by treatment of each of the samples 1 to 18, the ratio of the flocculant added in the neutralization step, the equivalent of hydrogen sulfide gas added in the dezincification step, the treatment capacity and filterability of the filter press, and the Zn grade of a product are shown in the following Table 1. It is to be noted that the post-neutralization solutions obtained by treatment of the samples 1 to 18 had the following metal concentrations other than the Fe concentration: nickel 3.6 to 4.0 g/L, cobalt 0.30 to 0.39 g/L, and zinc 0.09 to 0.11 g/L, and a pH of 2.72 to 2.90.

The filterability of the filter press was determined by dividing a pressure difference between a pressure meter provided on the liquid supply side of the filter press and a pressure meter provided on the liquid discharge side of the filter press by a cumulative flow rate from the start of operation measured by an integrating flow meter provided on the liquid supply side of the filter press. The treatment capacity of the filter press was determined by a flow meter provided on the liquid supply side of the filter press. The Zn grade of a product was measured by subjecting a mixed sulfide obtained in the nickel recovery step to fluorescent X-ray analysis (XRF). The ratio of the flocculant added and the equivalent of hydrogen sulfide gas added were calculated by the following formulas 3 and 4, respectively.

[Table 1]

| Samples | Fe concentration of post-neutralization solution (g/L) | Ratio of flocculant added (g/t) | Equivalent of $H_2S$ gas added (molar equivalent) | Filtration treatment capacity ($m^3$/hr) | Filterability (kPa/m3) | Zn grade of product (ppm by mass) |
|---|---|---|---|---|---|---|
| 1 | 0.71 | 9.8 | 3.06 | 1276 | 0.063 | 141 |
| 2 | 0.72 | 10.3 | 2.88 | 1330 | 0.038 | 185 |
| 3 | 0.72 | 9.3 | 2.77 | 1259 | 0.058 | 113 |
| 4 | 0.73 | 11.3 | 3.08 | 1353 | 0.061 | 114 |
| 5 | 0.76 | 10.2 | 2.89 | 1361 | 0.085 | 145 |
| 6 | 0.76 | 9.7 | 2.86 | 1330 | 0.048 | 143 |
| 7 | 0.77 | 9.2 | 2.83 | 1297 | 0.056 | 175 |
| 8 | 0.80 | 9.2 | 3.01 | 1324 | 0.075 | 164 |
| 9 | 0.89 | 10.4 | 3.08 | 1209 | 0.094 | 214 |
| 10 | 1.05 | 9.4 | 3.49 | 1226 | 0.089 | 231 |
| *11 | 1.36 | 12.9 | 3.97 | 1264 | 0.104 | 87 |
| *12 | 1.41 | 14.6 | 4.24 | 1153 | 0.102 | 115 |
| *13 | 1.41 | 14.9 | 4.25 | 1182 | 0.103 | 144 |
| *14 | 1.56 | 15.6 | 4.47 | 1144 | 0.119 | 126 |
| *15 | 1.58 | 11.3 | 4.32 | 998 | 0.132 | 193 |
| *16 | 1.59 | 15.9 | 4.61 | 1095 | 0.123 | 186 |
| *17 | 1.73 | 14.3 | 4.59 | 1110 | 0.112 | 180 |
| *18 | 1.86 | 11.4 | 4.31 | 1018 | 0.128 | 189 |
| (Note) Samples labeled with * in Table 1 are samples of Comparative Examples. | | | | | | |

[Formula 3]

Ratio of flocculant added = amount of flocculant added (g/hr)/total flow rate of leachate and neutralizer (t/hr)

[Formula 4]

Equivalent of hydrogen sulfide gas added = amount of hydrogen sulfide gas added (mol/hr)/[flow rate of post-neutralization solution × mol concentration of zinc] (mol/hr)

As can be seen from the results shown in the above Table 1, when the samples 1 to 10 satisfying the requirements of the present invention were treated, all the values obtained by dividing the differential pressure of the filtration device by the cumulative flow rate were less than 0.10 kPa/m$^3$, that is, excellent filterability was achieved. On the other hand, when the samples 11 to 18 not satisfying the requirements of the present invention were treated, all the values obtained by dividing the differential pressure of the filtration device by the cumulative flow rate exceeded 0.10 kPa/m$^3$, that is, filterability was inferior to that when the samples 1 to 10 were treated.

## Claims

1. A hydrometallurgical method for refining nickel oxide ore, comprising: a leaching step in which nickel oxide ore is subjected to acid leaching with a sulfuric acid solution in a pressurized vessel under high pressure; a solid-liquid separation step in which a leach slurry obtained in the leaching step is washed and then subjected to solid-liquid separation to obtain a leachate containing nickel and impurity elements and a leach residue; a neutralization step in which a neutralizer is added to the leachate to adjust pH, and a flocculant is added to the leachate to produce a neutralized precipitate containing the impurity elements, and then the neutralized precipitate is separated by solid-liquid separation from a post-neutralization solution containing the nickel; a dezincification step in which a sulfurizing agent is added to the post-neutralization solution to produce zinc sulfide, and then a slurry containing the zinc sulfide is subjected to solid-liquid separation to obtain the zinc sulfide and a post-dezincification solution; and a nickel recovery step in which a sulfurizing agent is added to the post-dezincification solution to produce a mixed sulfide containing the nickel, and then the mixed sulfide is separated by solid-liquid separation from a post-sulfurization solution, wherein an amount of the neutralizer added is adjusted so that a Fe concentration of the post-neutralization solution obtained in the neutralization step is 1.25 g/L or less.

2. The hydrometallurgical method for refining nickel oxide ore according to claim 1, wherein the flocculant is added in an amount of 12 g or less per ton of a total amount of the leachate and the neutralizer.

3. The hydrometallurgical method for refining nickel oxide ore according to claim 1 or 2, wherein the sulfurizing agent is added in an amount of 1 molar equivalent or more but 3.5 molar equivalents or less with respect to an amount of zinc contained in the post-neutralization solution.

[Fig. 1]

[Fig. 2]

NICKEL OXIDE ORE

↓

LEACHING STEP

↓

LEACH SLURRY

↓

SOLID-LIQUID SEPARATION STEP

NEUTRALIZER  FLOCCULANT  LEACHATE          LEACH RESIDUE

↓          ↓          ↓            ↓

NEUTRALIZATION STEP

NEUTRALIZED RESIDUE       POST-NEUTRALIZATION SOLUTION

SULFURIZING AGENT

↓

DEZINCIFICATION STEP

ZINC SULFIDE  SULFURIZING AGENT  POST-DEZINCIFICATION SOLUTION

↓          ↓

NICKEL RECOVERY STEP

MIXED SULFIDE       POST-SULFURIZATION SOLUTION

[Fig. 3]

[Fig. 4]

[Fig. 5]

RATIO OF FLOCCULANT ADDED IN NEUTRALIZATION STEP (g/t)

[Fig. 6]

AMOUNT OF HYDROGEN SULFIDE GAS ADDED IN DEZINCIFICATION STEP

[Fig. 7]

PRECIPITATION RATIO OF NICKEL IN DEZINCIFICATION STEP (%)

EQUIVALENT OF HYDROGEN SULFIDE GAS ADDED IN DEZINCIFICATION STEP

**INTERNATIONAL SEARCH REPORT**

| International application No. |
| --- |
| PCT/JP2017/036245 |

A.    CLASSIFICATION OF SUBJECT MATTER
Int.Cl.  C22B23/00(2006.01)i

According to International Patent Classification (IPC) or to both national classification and IPC

B.    FIELDS SEARCHED

Minimum documentation searched (classification system followed by classification symbols)
Int.Cl.  C22B23/00

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2017 |
| Registered utility model specifications of Japan | 1996–2017 |
| Published registered utility model specifications of Japan | 1994–2017 |

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| X | Document 1: JP 2010-037626 A (SUMITOMO METAL MINING CO., LTD.) 18 February 2010, claims, paragraphs [0022], [0023], [0031] & US 2010/0034716 A1 claims, paragraphs [0057], [0058], [0072] & AU 2009203214 A | 1-3 |

☐  Further documents are listed in the continuation of Box C.          ☐  See patent family annex.

| | |
| --- | --- |
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| 27 November 2017 (27.11.2017) | 05 December 2017 (05.12.2017) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005350766 A

- JP 2010037626 A